(19) Europäisches Patentamt
European Patent Office
Office européen des brevets

(11) EP 4 318 653 A1

(12) EUROPEAN PATENT APPLICATION
published in accordance with Art. 153(4) EPC

(43) Date of publication:
07.02.2024 Bulletin 2024/06

(51) International Patent Classification (IPC):
H01M 4/36 (2006.01)    H01M 4/525 (2010.01)
H01M 4/505 (2010.01)    H01M 10/052 (2010.01)
H01M 4/02 (2006.01)

(21) Application number: 22799090.0

(22) Date of filing: 03.05.2022

(52) Cooperative Patent Classification (CPC):
H01M 4/02; H01M 4/36; H01M 4/505; H01M 4/525;
H01M 10/052; Y02E 60/10

(86) International application number:
PCT/KR2022/006322

(87) International publication number:
WO 2022/235047 (10.11.2022 Gazette 2022/45)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 04.05.2021 KR 20210058086

(71) Applicant: LG Chem, Ltd.
Seoul 07336 (KR)

(72) Inventors:
• PARK, Na Ri
Daejeon 34122 (KR)
• EOM, Jun Ho
Daejeon 34122 (KR)
• LIM, Chae Jin
Daejeon 34122 (KR)
• LEE, Jun Won
Daejeon 34122 (KR)
• KWAK, No Woo
Daejeon 34122 (KR)
• KIM, Ji Hye
Daejeon 34122 (KR)
• JUNG, Byoung Hun
Daejeon 34122 (KR)

(74) Representative: Hoffmann Eitle
Patent- und Rechtsanwälte PartmbB
Arabellastraße 30
81925 München (DE)

(54) POSITIVE ELECTRODE ACTIVE MATERIAL FOR LITHIUM SECONDARY BATTERY, AND POSITIVE ELECTRODE AND LITHIUM SECONDARY BATTERY COMPRISING SAME

(57) The present invention is to provide a positive electrode active material capable of achieving a battery having excellent capacity characteristics and life characteristics, wherein the present invention relates to a positive electrode active material, which includes a first lithium transition metal oxide and a second lithium transition metal oxide having an average particle diameter ($D_{50}$) smaller than that of the first lithium transition metal oxide, wherein particle strength of the first lithium transition metal oxide is 140 MPa or more, and a difference in particle strength between the first lithium transition metal oxide and the second lithium transition metal oxide is 10 MPa or less, and a positive electrode and a lithium secondary battery which include the same.

[FIG. 1]

EP 4 318 653 A1

Description

## TECHNICAL FIELD

### Cross-reference to Related Applications

This application claims priority from Korean Patent Application No. 10-2021-0058086, filed on May 4, 2021, the disclosure of which is incorporated by reference herein.

### Technical Field

The present invention relates to a positive electrode active material for a lithium secondary battery, and a positive electrode and a lithium secondary battery which include the same.

## BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has poor thermal properties due to an unstable crystal structure caused by delithiation. Also, since the $LiCoO_2$ is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a lithium transition metal oxide, in which a portion of nickel (Ni) is substituted with cobalt (Co), manganese (Mn), or aluminum (Al), has been developed.

With respect to a lithium ion battery using the lithium transition metal oxide, particularly, a lithium transition metal oxide containing a high content of nickel (Ni-rich) as a positive electrode active material, battery capacity, high output, and gas generation at high temperatures are not only affected by chemical properties such as a composition of the positive electrode active material, a content of impurities, and a content of lithium by-product present on a surface thereof, but are also affected by physical properties such as size, surface area, density, and shape of positive electrode active material particles.

In general, in order to maximize volumetric energy density of a battery, a method has been used in which the volumetric energy density of the battery is improved by using a mixture of a positive electrode active material having a large particle diameter and a positive electrode active material having a small particle diameter to fill voids between large-diameter positive electrode active material particles with the small-diameter positive electrode active material, and a method of rolling a positive electrode active material layer using a roll press has been used to prepare the positive electrode active material layer having a more dense structure. In this case, since excessive cracks occur in the particles having relatively weak particle strength during rolling due to a difference in particle strength between the positive electrode active material having a large particle diameter and the positive electrode active material having a small particle diameter, the particles not only lose their original shape, but a contact area with an electrolyte solution is also excessively increased, and thus, there has been a problem in that life characteristics are degraded when the positive electrode active material layer is used in the battery.

Therefore, there is a need to develop a positive electrode active material which may improve volumetric energy density and may improve life characteristics by suppressing particle cracking during rolling for preparing a positive electrode.

## DISCLOSURE OF THE INVENTION

## TECHNICAL PROBLEM

An aspect of the present invention provides a positive electrode active material which may suppress particle cracking when the positive electrode active material including two types of lithium transition metal oxides having different average particle diameters is rolled.

## TECHNICAL SOLUTION

In order to solve the above-described tasks, the present invention provides a positive electrode active material, a positive electrode, and a lithium secondary battery.

(1) The present invention provides a positive electrode active material including: a first lithium transition metal oxide and a second lithium transition metal oxide having an average particle diameter ($D_{50}$) smaller than an average particle diameter ($D_{50}$) of the first lithium transition metal oxide, wherein particle strength of the first lithium transition metal oxide is 140 MPa or more, and a difference in particle strength between the first lithium transition metal oxide and the second lithium transition metal oxide is 10 MPa or less.

(2) The present invention provides the positive electrode active material of (1) above, wherein the particle strength of the second lithium transition metal oxide is smaller than or equal to the particle strength of the first lithium transition metal oxide.

(3) The present invention provides the positive electrode active material of (1) or (2) above, wherein the particle strength of the second lithium transition metal oxide is in a range of 130 MPa or more to 190 MPa or less.

(4) The present invention provides the positive electrode active material of any one of (1) to (3) above, wherein the positive electrode active material has a bimodal particle size distribution.

(5) The present invention provides the positive electrode active material of any one of (1) to (4) above, wherein the average particle diameter ($D_{50}$) of the first lithium transition metal oxide is in a range of 6 um to 25 $\mu$m.

(6) The present invention provides the positive electrode active material of any one of (1) to (5) above, wherein the average particle diameter ($D_{50}$) of the second lithium transition metal oxide is in a range of 1 um to 12 $\mu$m.

(7) The present invention provides the positive electrode active material of any one of (1) to (6) above, wherein the first lithium transition metal oxide and the second lithium transition metal oxide are each independently a lithium transition metal oxide in which a mole ratio of nickel in transition metals is 60% or more.

(8) The present invention provides the positive electrode active material of any one of (1) to (7) above, wherein the first lithium transition metal oxide and the second lithium transition metal oxide each independently have a composition represented by Formula 1.

$$[\text{Formula 1}] \qquad Li_{1+a}Ni_xCo_yM^1_zM^2_wO_2$$

wherein, in Formula 1,
$0 \leq a \leq 0.30$, $0.60 \leq x < 1.0$, $0 < y < 0.40$, $0 < z < 0.40$, and $0 \leq w \leq 0.10$,
$M^1$ is at least one selected from manganese (Mn) and aluminum (Al), and
$M^2$ is at least one selected from tungsten (W), molybdenum (Mo), chromium (Cr), zirconium (Zr), titanium (Ti), magnesium (Mg), tantalum (Ta), and niobium (Nb).

(9) The present invention provides the positive electrode active material of any one of (1) to (8) above, wherein the first lithium transition metal oxide and the second lithium transition metal oxide are included in a weight ratio of 60:40 to 90:10.

(10) The present invention provides a positive electrode including a positive electrode active material layer which includes the positive electrode active material of any one of (1) to (9), wherein the first lithium transition metal oxide included in the positive electrode active material layer satisfies Equation 1.

[Equation 1]

$$0.4 \leq \frac{4\pi A}{P^2} \quad (= \text{Form Factor}, F)$$

wherein, in Equation 1, A and P are cross-sectional area and circumferential length of the first lithium transition metal oxide particle, respectively.

(11) The present invention provides the positive electrode of (10) above, wherein the positive electrode active material layer has a porosity of 15 vol% to 30 vol%.

(12) The present invention provides a lithium secondary battery including the positive electrode of (10) or (11).

**ADVANTAGEOUS EFFECTS**

With respect to a positive electrode active material according to the present invention, since particle strength of a large-particle-diameter lithium transition metal oxide is above a specific value and a difference in particle strength between a small-particle-diameter lithium transition metal oxide and the large-particle-diameter lithium transition metal oxide is small, the positive electrode active material according to the present invention may effectively suppress a cracking phenomenon of the lithium transition metal oxide particles during rolling for preparing a positive electrode. Thus, in a case in which the positive electrode active material according to the present invention is used, the occurrence of a side reaction with an electrolyte solution caused by cracking of the lithium transition metal oxide particles may be minimized, and excellent capacity characteristics and life characteristics may be achieved.

**BRIEF DESCRIPTION OF THE DRAWINGS**

FIG. 1 is a scanning electron microscope (SEM) image illustrating a cross section of a positive electrode which is prepared by using a positive electrode active material prepared in Example 1.

FIG. 2 is an SEM image illustrating a cross section of a positive electrode which is prepared by using a positive electrode active material prepared in Example 2.

FIG. 3 is an SEM image illustrating a cross section of a positive electrode which is prepared by using a positive electrode active material prepared in Example 3.

FIG. 4 is an SEM image illustrating a cross section of a positive electrode which is prepared by using a positive electrode active material prepared in Comparative Example 1.

FIG. 5 is an SEM image illustrating a cross section of a positive electrode which is prepared by using a positive electrode active material prepared in Comparative Example 2.

FIG. 6 is an SEM image illustrating a cross section of a positive electrode which is prepared by using a positive electrode active material prepared in Comparative Example 3.

FIG. 7 is an SEM image illustrating a cross section of a positive electrode which is prepared by using a positive electrode active material prepared in Comparative Example 4.

**MODE FOR CARRYING OUT THE INVENTION**

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the expression "average particle diameter ($D_{50}$)" may be defined as a particle diameter at a cumulative volume of 50% in a particle size distribution curve. The average particle diameter ($D_{50}$), for example, may be measured by using a laser diffraction method. The laser diffraction method may generally measure a particle diameter ranging from a few nm to a few mm and may obtain highly repeatable and high-resolution results.

In the present specification, after a sample of lithium transition metal oxide particles is collected and the collected sample is placed on glass, particle strength (MPa) is a value which is obtained by measuring a force until the particles break and a tip touches the glass on which the sample has been placed while applying a constant pressure (100 mN) to the sample with the tip.

**Positive Electrode Active Material**

The present inventors have found that, since two types of lithium transition metal oxides having different average particle diameters are mixed and used, but a difference in particle strength between a large-particle-diameter first lithium transition metal oxide having a relatively large average particle diameter and a small-particle-diameter second lithium transition metal oxide having a relatively small average particle diameter is optimized and the large-particle-diameter first lithium transition metal oxide having a particle strength of 140 MPa or more is used, particle cracking may be suppressed while high volumetric energy density is obtained, and, accordingly, excellent capacity characteristics and long life characteristics may be secured when the two types of lithium transition metal oxides are used in a battery, thereby leading to the completion of the present invention.

Hereinafter, a positive electrode active material according to the present invention will be described in detail.

The positive electrode active material according to the present invention includes a first lithium transition metal oxide and a second lithium transition metal oxide having an average particle diameter ($D_{50}$) smaller than that of the first lithium transition metal oxide, wherein particle strength of the first lithium transition metal oxide is 140 MPa or more, and a difference in particle strength between the first lithium transition metal oxide and the second lithium transition metal oxide is 10 MPa or less.

The positive electrode active material according to the present invention includes a first lithium transition metal oxide and a second lithium transition metal oxide having an average particle diameter ($D_{50}$) smaller than that of the first lithium transition metal oxide, which have different average particle diameters, and has a bimodal particle size distribution.

For example, the first lithium transition metal oxide may be particles having a relatively large average particle diameter, and the second lithium transition metal oxide may be particles having a relatively small average particle diameter.

The first lithium transition metal oxide may have an average particle diameter ($D_{50}$) of 6 um to 25 um, particularly 6 um to 22 $\mu$m, and more particularly 8 um to 20 um, and the second lithium transition metal oxide may have an average particle diameter ($D_{50}$) of 1 $\mu$m to 12 $\mu$m, particularly 2 $\mu$m to 10 $\mu$m, and more particularly 2 $\mu$m to 8 $\mu$m.

In a case in which the average particle diameters ($D_{50}$) of the first lithium transition metal oxide and the second lithium transition metal oxide satisfy the above ranges, since the second lithium transition metal oxide particles are filled between the first lithium transition metal oxide particles, tap density of the positive electrode active material including the same may be improved. Since the higher the tap density is the higher the packing density of the electrode is, a slurry containing the positive electrode active material having the tap density may be thinly applied to a surface of a positive electrode collector when the electrode is prepared by using the positive electrode active material, and thus, a thickness of the electrode after coating is improved to be thin and a pressure required to reach the thickness of the electrode to match rolling density in a process of rolling the electrode may be reduced to improve cracking of the positive electrode active material due to the rolling. In addition, capacity characteristics may be further improved as the volumetric energy density is improved.

The particle strength of the first lithium transition metal oxide is 140 MPa or more, and the difference in particle strength between the first lithium transition metal oxide and the second lithium transition metal oxide is 10 MPa or less. In this case, since the particle strengths of the first lithium transition metal oxide and the second lithium transition metal oxide are similarly controlled, physical force is not concentrated on either side during rolling for preparing a positive electrode, but may be dispersed to allow each of the first lithium transition metal oxide particles and the second lithium transition metal oxide particles to maintain an original shape and cracking of the particles may be suppressed.

In contrast, in a case in which the particle strength of the first lithium transition metal oxide is less than 140 MPa, since the large-diameter first lithium transition metal oxide particles occupying a large portion of the electrode are easily broken, there is a problem in that a specific surface area capable of reacting with an electrolyte solution is increased. In addition, in a case in which the difference in particle strength between the first lithium transition metal oxide and the second lithium transition metal oxide is greater than 10 MPa, since the small-diameter second lithium transition metal oxide particles may be completely broken between the large-diameter first lithium transition metal oxide particles, the problem of increasing the specific surface area capable of reacting with the electrolyte solution may be further intensified.

The particle strength of the first lithium transition metal oxide may be specifically 140 MPa to 200 MPa, for example, 140 MPa to 160 MPa. In addition, the particle strength of the second lithium transition metal oxide may be equal to or smaller than that of the first lithium transition metal oxide, and may specifically be 130 MPa or more to less than 190 MPa, for example, 130 MPa to 150 MPa. In a case in which the particle strengths of the first lithium transition metal oxide and the second lithium transition metal oxide satisfy the above ranges, the particle cracking during rolling for preparing a positive electrode may be mitigated. Accordingly, excellent rolling density may be achieved, and high-temperature life characteristics of the battery may be optimized.

Since the particle strength of the lithium transition metal oxide varies depending on a composition and characteristics of a precursor for a positive electrode active material (transition metal hydroxide, transition metal oxyhydroxide, etc.), as a raw material, and sintering conditions, a lithium transition metal oxide having desired particle strength may be prepared by appropriately adjusting the sintering conditions (temperature and time) according to the composition and/or characteristics (surface area, density, shape, etc.) of the precursor for a positive electrode active material.

The first lithium transition metal oxide and the second lithium transition metal oxide may each independently be a lithium transition metal oxide in which a mole ratio of nickel in transition metals is 80% or more. Since the nickel-rich lithium transition metal oxide has large capacity per unit volume, excellent capacity characteristics may be achieved when it is used in a battery.

Specifically, the first lithium transition metal oxide and the second lithium transition metal oxide may each independently have a composition represented by Formula 1 below.

$$[\text{Formula 1}] \qquad Li_{1+a}Ni_xCo_yM^1_zM^2_wO_2$$

In Formula 1, $M^1$ may be at least one selected from manganese (Mn) and aluminum (Al), and may specifically include Mn and Al at the same time.

$M^2$ may be at least one selected from tungsten (W), molybdenum (Mo), chromium (Cr), zirconium (Zr), titanium (Ti), magnesium (Mg), tantalum (Ta), and niobium (Nb).

1+a represents a molar ratio of lithium in the lithium transition metal oxide, wherein a may satisfy $0 \le a \le 0.30$, for example, $0 \le a \le 0.20$.

x represents a molar ratio of nickel in total transition metals, wherein x may satisfy $0.60 \le x < 1.0$, $0.60 \le x \le 0.99$, $0.60 \le x \le 0.95$, $0.60 \le x \le 0.90$, or $0.60 \le x \le 0.85$. In a case in which the nickel content satisfies the above range, excellent capacity characteristics may be achieved.

y represents a molar ratio of cobalt in the total transition metals, wherein y may satisfy $0 < y < 0.40$, $0 < y < 0.30$, or $0.01 \le y \le 0.20$.

z represents a molar ratio of $M^1$ in the total transition metals, wherein z may satisfy $0 < z < 0.40$, $0 < z < 0.30$, or $0.01 < z < 0.20$.

w represents a molar ratio of $M^2$ in the total transition metals, wherein w may satisfy $0 \le w \le 0.10$ or $0 \le w \le 0.05$.

More specifically, the first lithium transition metal oxide and the second lithium transition metal oxide may each independently have a composition represented by Formula 2 below.

$$[\text{Formula 2}] \qquad Li_{1+a}Ni_xCo_yM_{nz1}Al_{z2}M^2_wO_2$$

In Formula 2, a, x, y, w, and $M^2$ are the same as defined in Formula 1.

That is, $M^2$ may be at least one selected from the group consisting of W, Mo, Cr, Zr, Ti, Mg, Ta, and Nb.

1+a represents a molar ratio of lithium in the lithium transition metal oxide, wherein a may satisfy $0 \le a \le 0.30$, for example, $0 \le a \le 0.20$.

x represents a molar ratio of nickel in total transition metals, wherein x may satisfy $0.60 \le x < 1.0$, $0.60 \le x \le 0.99$, $0.60 \le x \le 0.95$, $0.60 \le x \le 0.90$, or $0.60 \le x \le 0.85$. In a case in which the nickel content satisfies the above range, excellent capacity characteristics may be achieved.

y represents a molar ratio of cobalt in the total transition metals, wherein y may satisfy $0 < y < 0.40$, $0 < y < 0.30$, or $0.01 \le y \le 0.20$.

w represents a molar ratio of $M^2$ in the total transition metals, wherein w may satisfy $0 \le w \le 0.10$ or $0 \le w \le 0.05$.

z1 represents a molar ratio of Mn in the transition metals, wherein z1 may satisfy $0 < z1 < 0.40$, $0 < z1 < 0.30$, or $0 < z1 < 0.20$.

z2 represents a molar ratio of Al in the transition metals, wherein z2 may satisfy $0 < z2 < 0.20$, $0 < z2 < 0.15$, or $0 < z2 < 0.10$.

Compositions of the first lithium transition metal oxide and the second lithium transition metal oxide may be the same or different from each other. For example, the first lithium transition metal oxide may be a lithium transition metal oxide having a molar ratio of nickel in the transition metals of 85 mol% or more, and the second lithium transition metal oxide may be a lithium transition metal oxide having a molar ratio of nickel in the transition metals of 80 mol% to 85 mol%.

The first lithium transition metal oxide and the second lithium transition metal oxide may further include a coating layer including at least one element (hereinafter, referred to as a 'coating element') selected from the group consisting of Al, Ti, W, boron (B), fluorine (F), phosphorus (P), Mg, nickel (Ni), cobalt (Co), iron (Fe), Cr, vanadium (V), copper (Cu), calcium (Ca), zinc (Zn), Zr, Nb, Mo, strontium (Sr), antimony (Sb), bismuth (Bi), silicon (Si), and sulfur (S) on surfaces of the lithium transition metal oxides, if necessary. In a case in which the coating layer as described above is included, since a contact between the lithium transition metal oxide and the electrolyte solution is blocked, gas generation due to a side reaction with the electrolyte solution and dissolution of the transition metal may be effectively suppressed.

The coating layer may be formed through a method of mixing the lithium transition metal oxide and a raw material including the coating element and then heat-treating the mixture at a temperature of 200°C to 500°C.

The positive electrode active material according to the present invention may include the first lithium transition metal oxide and the second lithium transition metal oxide in a weight ratio of 60:40 to 90:10, specifically 60:40 to 90:10, and more specifically 70:30 to 90:10. In this case, an effect of improving the tap density of the positive electrode active material may be obtained.

## Positive Electrode

Also, the present invention provides a positive electrode which includes a positive electrode active material layer including the above positive electrode active material. Specifically, the positive electrode includes a positive electrode collector and a positive electrode active material layer which is disposed on at least one surface of the positive electrode collector and includes the above positive electrode active material. The positive electrode active material layer may have a porosity of 15 vol% to 30 vol%, particularly 18 vol% to 30 vol%, and more particularly 20 vol% to 30 vol%.

In this case, the first lithium transition metal oxide included in the positive electrode active material layer satisfies the following Equation 1. That is, in a case in which a positive electrode is prepared by using the positive electrode active material according to the present invention, since the first lithium transition metal oxide particles are less cracked, a Form Factor value may be 0.4 or more, specifically, 0.4 to 1. In contrast, in a case in which a positive electrode is prepared by using a positive electrode active material that does not satisfy the present invention, first lithium transition metal oxide particles are broken during rolling for preparing the positive electrode, and, accordingly, a length of a circumference of the first lithium transition metal oxide particle, that is, a length of a boundary is increased so that the Form Factor value does not satisfy 0.4 or more and is decreased.

$$[\text{Equation } 1]$$

$$0.4 \ \leq \ \frac{4\pi A}{P^2} \ (= \text{Form Factor}, \text{F})$$

In Equation 1,
A and P are cross-sectional area and circumferential length of the first lithium transition metal oxide particle, respectively.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode active material according to the present invention.

The positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the positive electrode active material according to the present invention is used. Specifically, a composition for forming a positive electrode active material layer, which is prepared by dissolving or dispersing the above-described positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

**Lithium Secondary Battery**

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0 < \beta < 2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 parts by weight or less, for example, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

**Examples and Comparative Examples**

**Example 1**

**- First Lithium Transition Metal Oxide Preparation**

$NiSO_4$, $CoSO_4$, and $MnSO_4$ were dissolved in water in amounts such that a molar ratio of nickel:cobalt:manganese was 88:5:7 to prepare a transition metal-containing solution with a concentration of 2 M.

A container containing the transition metal-containing solution, an additional 25 wt% NaOH solution, and a 15 wt% $NH_4OH$ aqueous solution were respectively connected to a 200 L batch-type reactor set at 55°C.

Subsequently, after deionized water was put into the batch-type reactor, dissolved oxygen in the water was removed by purging with nitrogen gas to create a non-oxidizing atmosphere in the reactor. Thereafter, after NaOH was added, a pH in the co-precipitation reactor was maintained at 11.7 while the mixture was stirred at a stirring speed of 250 rpm.

Thereafter, the transition metal-containing solution was added to the co-precipitation reactor at a rate of 250 mL/hr, an $NH_4OH$ aqueous solution was added at a rate of 40 mL/hr, and an aqueous NaOH solution was added at a rate at which a pH of a reaction solution may be maintained at 11.7, and, after 6 hours of reaction, stirring was stopped and a supernatant was removed to concentrate the reaction solution. This process was repeated 4 to 5 times to grow particles until an average particle diameter ($D_{50}$) reached about 10 um.

The particles thus prepared were filtered with a filter press, and then dried at 130°C for 24 hours to obtain a first positive electrode active material precursor with a composition of $Ni_{0.88}Co_{0.05}Mn_{0.07}(OH)_2$.

Subsequently, $LiOH \cdot H_2O$ was added such that an equivalence ratio of $LiOH \cdot H_2O$ to the first positive electrode active material precursor was 1.06, and $Al(OH)_3$ was mixed and sintered at 775°C for 13.5 hours in an oxygen atmosphere to prepare a lithium transition metal oxide having a molar ratio of nickel:cobalt:manganese:aluminum of 86:5:7:2.

The lithium transition metal oxide was stirred with distilled water in a weight ratio of 1:1.1 and washed with the distilled water.

$H_3BO_3$ was mixed with the lithium transition metal oxide after the completion of the washing and a heat treatment was performed at 295°C for 5 hours to prepare a B-coated first lithium transition metal oxide.

**- Second Lithium Transition Metal Oxide Preparation**

A second positive electrode active material precursor was prepared in the same manner as the method of preparing the first positive electrode active material precursor except that $NiSO_4$, $CoSO_4$, and $MnSO_4$ were dissolved in water in amounts such that a molar ratio of nickel:cobalt:manganese was 83:5:12 to prepare a transition metal-containing solution with a concentration of 2 M, the transition metal-containing solution was used, and a concentration process was repeated only 2 to 3 times during the preparation of the precursor to grow particles until an average particle diameter ($D_{50}$) was about 5 $\mu$m.

The average particle diameter ($D_{50}$) of the second positive electrode active material precursor prepared was about 5 um, and a composition was $Ni_{0.83}Co_{0.05}Mn_{0.12}(OH)_2$.

Then, $LiOH \cdot H_2O$ was added such that an equivalence ratio of $LiOH \cdot H_2O$ to the second positive electrode active material precursor was 1.06, and $Al(OH)_3$ was mixed and sintered at 790°C for 13.5 hours in an oxygen atmosphere to prepare a lithium transition metal oxide having a molar ratio of nickel:cobalt:manganese:aluminum of 81:5:12:2.

The lithium transition metal oxide was stirred with distilled water in a weight ratio of 1:1.1 and washed with the distilled water.

$H_3BO_3$ was mixed with the lithium transition metal oxide after the completion of the washing and a heat treatment was performed at 295°C for 5 hours to prepare a B-coated second lithium transition metal oxide.

**- Positive Electrode Active Material Preparation**

The above-prepared first lithium transition metal oxide and second lithium transition metal oxide were mixed in a weight ratio of 8:2 to prepare a positive electrode active material.

**Example 2**

**- First Lithium Transition Metal Oxide Preparation**

A first lithium transition metal oxide was prepared in the same manner as in Example 1.

**- Second Lithium Transition Metal Oxide Preparation**

A second lithium transition metal oxide was prepared in the same manner as in Example 1 except that sintering was performed at 795°C instead of 790°C.

**- Positive Electrode Active Material Preparation**

The above-prepared first lithium transition metal oxide and second lithium transition metal oxide were mixed in a weight ratio of 8:2 to prepare a positive electrode active material.

**Example 3**

**- First Lithium Transition Metal Oxide Preparation**

A first lithium transition metal oxide was prepared in the same manner as in Example 1 except that sintering was performed at 780°C instead of 775°C.

**- Second Lithium Transition Metal Oxide Preparation**

A second lithium transition metal oxide was prepared in the same manner as in Example 1 except that sintering was performed at 805°C instead of 790°C.

**- Positive Electrode Active Material Preparation**

The above-prepared first lithium transition metal oxide and second lithium transition metal oxide were mixed in a weight ratio of 8:2 to prepare a positive electrode active material.

**Comparative Example 1**

**- First Lithium Transition Metal Oxide Preparation**

A first lithium transition metal oxide was prepared in the same manner as in Example 1 except that sintering was performed at 785°C instead of 775°C.

**- Second Lithium Transition Metal Oxide Preparation**

A second lithium transition metal oxide was prepared in the same manner as in Example 1.

**- Positive Electrode Active Material Preparation**

The above-prepared first lithium transition metal oxide and second lithium transition metal oxide were mixed in a weight ratio of 8:2 to prepare a positive electrode active material.

**Comparative Example 2**

**- First Lithium Transition Metal Oxide Preparation**

$NiSO_4$, $CoSO_4$, and $MnSO_4$ were dissolved in water in amounts such that a molar ratio of nickel:cobalt:manganese was 88:5:7 to prepare a transition metal-containing solution with a concentration of 2 M.

A container containing the transition metal-containing solution, an additional 25 wt% NaOH solution, and a 15 wt% $NH_4OH$ aqueous solution were respectively connected to a 200 L batch-type reactor set at 55°C.

Subsequently, after deionized water was put into the batch-type reactor, dissolved oxygen in the water was removed by purging with nitrogen gas to create a non-oxidizing atmosphere in the reactor. Thereafter, after NaOH was added, a pH in the co-precipitation reactor was maintained at 11.7 while the mixture was stirred at a stirring speed of 250 rpm.

Thereafter, the transition metal-containing solution was added to the co-precipitation reactor at a rate of 250 mL/hr, an $NH_4OH$ aqueous solution was added at a rate of 40 mL/hr, and an aqueous NaOH solution was added at a rate at which a pH of a reaction solution may be maintained at 11.7, and, after 6 hours of reaction, stirring was stopped and a supernatant was removed to concentrate the reaction solution. This process was repeated 4 to 5 times to grow particles until an average particle diameter ($D_{50}$) reached about 10 $\mu$m.

The particles thus prepared were filtered with a filter press, and then dried at 130°C for 24 hours to obtain a precursor for a first positive electrode active material with a composition of $Ni_{0.88}Co_{0.05}Mn_{0.07}(OH)_2$.

Subsequently, $LiOH \cdot H_2O$ was added such that an equivalence ratio of $LiOH \cdot H_2O$ to the precursor for a first positive electrode active material was 1.06, and $Al(OH)_3$ was mixed and sintered at 795°C for 13.5 hours in an oxygen atmosphere to prepare a lithium transition metal oxide having a molar ratio of nickel:cobalt:manganese:aluminum of 86:5:7:2.

The lithium transition metal oxide was stirred with distilled water in a weight ratio of 1:1.1 and washed with the distilled water.

$H_3BO_3$ was mixed with the lithium transition metal oxide after the completion of the washing and a heat treatment was performed at 295°C for 5 hours to prepare a B-coated first lithium transition metal oxide.

**- Second Lithium Transition Metal Oxide Preparation**

A second lithium transition metal oxide was prepared in the same manner as in Example 1 except that sintering was performed at 780°C instead of 790°C.

**- Positive Electrode Active Material Preparation**

The above-prepared first lithium transition metal oxide and second lithium transition metal oxide were mixed in a weight ratio of 8:2 to prepare a positive electrode active material.

**Comparative Example 3**

**- First Lithium Transition Metal Oxide Preparation**

A first lithium transition metal oxide was prepared in the same manner as in Example 1 except that sintering was performed at 770°C instead of 775°C.

**- Second Lithium Transition Metal Oxide Preparation**

A second lithium transition metal oxide was prepared in the same manner as in Example 1 except that sintering was performed at 780°C instead of 790°C.

**- Positive Electrode Active Material Preparation**

The above-prepared first lithium transition metal oxide and second lithium transition metal oxide were mixed in a weight ratio of 8:2 to prepare a positive electrode active material.

**Comparative Example 4**

**- First Lithium Transition Metal Oxide Preparation**

A first lithium transition metal oxide was prepared in the same manner as in Example 1 except that sintering was performed at 780°C instead of 775°C.

**- Second Lithium Transition Metal Oxide Preparation**

A second lithium transition metal oxide was prepared in the same manner as in Example 1.

**- Positive Electrode Active Material Preparation**

The above-prepared first lithium transition metal oxide and second lithium transition metal oxide were mixed in a weight ratio of 8:2 to prepare a positive electrode active material.

[Table 1]

| | First lithium transition metal oxide | | Second lithium transition metal oxide | | Difference in particle strength between the first lithium transition metal oxide and the second lithium transition metal oxide (MPa) |
|---|---|---|---|---|---|
| | Particle strength (MPa) | Average particle diameter ($D_{50}$) ($\mu$m) | Particle strength (MPa) | Average particle diameter ($D_{50}$) ($\mu$m) | |
| Example 1 | 141.43 | 10 | 132.68 | 5 | 8.75 |
| Example 2 | 141.43 | 10 | 134.83 | 5 | 6.60 |
| Example 3 | 146.54 | 10 | 142.27 | 5 | 4.27 |
| Comparative Example 1 | 159.70 | 10 | 132.68 | 5 | 27.02 |
| Comparative Example 2 | 119.15 | 10 | 134.83 | 5 | 15.68 |
| Comparative Example 3 | 130.58 | 10 | 125.50 | 5 | 5.08 |
| Comparative Example 4 | 146.54 | 10 | 132.68 | 5 | 13.86 |

**Experimental Example 1: Form factor (F) Check**

A positive electrode was prepared by using each of the positive electrode active materials prepared in Examples 1 to 3 and Comparative Examples 1 to 4. Specifically, each of the positive electrode active materials prepared in Examples 1 to 3 and Comparative Examples 1 to 4, a conductive agent (FX35), and a binder (KF9700 and BM730H were mixed in a weight ratio of 1.35:0.15) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried at 130°C, and then rolled to have a porosity of 24 vol% to prepare a positive electrode.

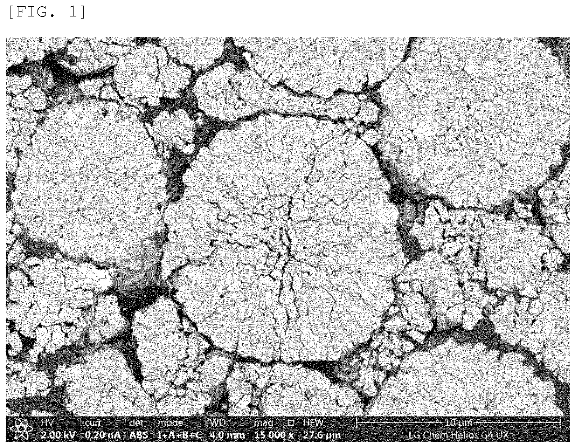

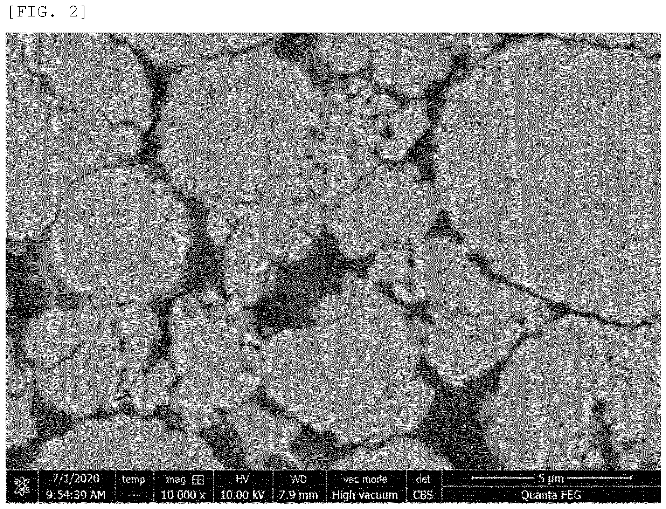

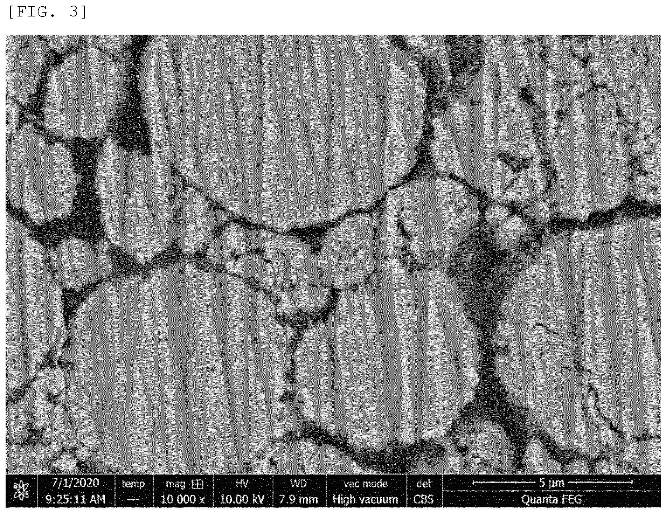

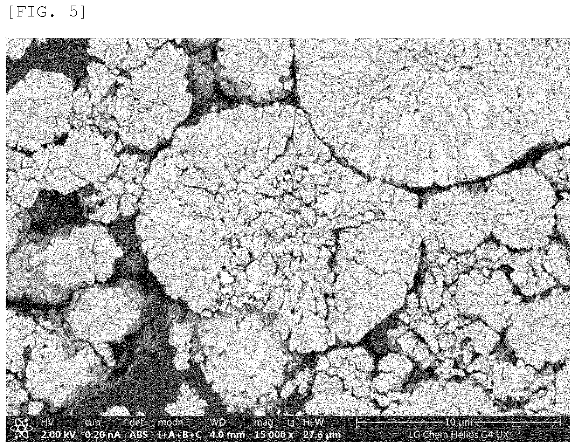

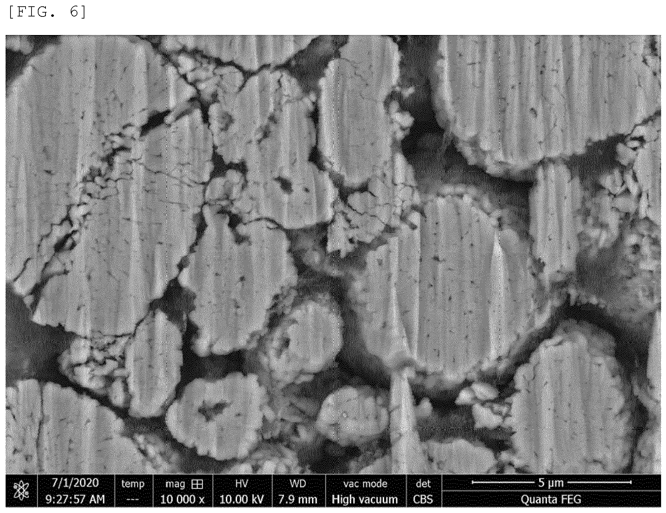

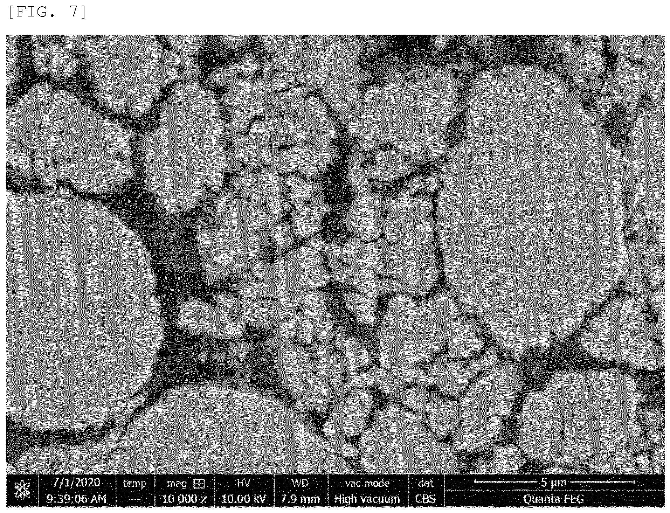

The positive electrode prepared by using each of the positive electrode active materials prepared in Examples 1 to 3 and Comparative Examples 1 to 4 was cut with an Ar-beam using a Cross-Section Polisher (HITACHI IM5000; acceleration voltage: 7 kV), and a cross-sectional scanning electron microscope (SEM) image of each positive electrode is illustrated in FIGS. 1 to 7.

In addition, the SEM images of FIGS. 1 to 7 were image-processed (using Mountains Software) to detect the first lithium transition metal oxide and second lithium transition metal oxide particles included in the positive electrode, and, among them, Form Factor values of the first lithium transition metal oxide particles were extracted to present an average value of Form Factors of each positive electrode in Table 2 below.

[Table 2]

|  | Form Factor |
|---|---|
| Example 1 | 0.43 |
| Example 2 | 0.47 |
| Example 3 | 0.55 |
| Comparative Example 1 | 0.37 |
| Comparative Example 2 | 0.32 |
| Comparative Example 3 | 0.25 |
| Comparative Example 4 | 0.33 |

As illustrated in Table 2, from the fact that the average values of Form Factors, when the positive electrode active materials prepared in Examples 1 to 3 were used, were relatively larger than those of the comparative examples, it may be confirmed that a cracking phenomenon of the positive electrode active material particles relatively less occurred when the positive electrode was prepared by applying a pressure.

**Experimental Example 2**

Lithium secondary batteries were prepared by using the positive electrodes including the positive electrode active materials of Examples 1 to 3 and Comparative Examples 1 to 4 which were prepared in Experimental Example 1, and life characteristics of each lithium secondary battery were evaluated.

In this case, a lithium (Li) metal disk was used as a negative electrode, and each lithium secondary battery was prepared by preparing an electrode assembly by disposing a separator between the positive electrodes and the negative electrode, disposing the electrode assembly in a battery case, and then injecting an electrolyte solution into the case. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

Subsequently, each of the prepared lithium secondary batteries was charged at a constant current of 0.1 C to 4.25 V in a constant current/constant voltage (CC/CV) mode at 25°C (CV 0.05 C), and then discharged to 3.0 V in a CC mode to measure 1st cycle initial charge capacity and discharge capacity.

Also, a charge and discharge cycle was repeated 30 times at a constant current of 0.33 C in a range of 3.0 V to 4.25 V at 45°C to measure capacity retention (discharge capacity in a 30th cycle/initial discharge capacity×100) and resistance increase rate (resistance in the 30th cycle/initial resistance×100) in the 30th cycle of each lithium secondary battery. Measurement results are presented in Table 3 below.

[Table 3]

|  | Initial charge capacity (mAh/g) | Initial discharge capacity (mAh/g) | Capacity retention (%) | Resistance increase rate (%) |
|---|---|---|---|---|
| Example 1 | 228.0 | 210.0 | 97.0 | 132.6 |
| Example 2 | 227.5 | 209.4 | 97.1 | 133.2 |
| Example 3 | 277.1 | 209.0 | 97.2 | 130.4 |
| Comparative Example 1 | 226.2 | 208.1 | 95.0 | 135.6 |
| Comparative Example 2 | 225.1 | 204.5 | 94.1 | 152.6 |
| Comparative Example 3 | 226.5 | 206.2 | 94.8 | 146.5 |
| Comparative Example 4 | 227.0 | 209.1 | 95.2 | 138.4 |

Referring to Table 3, in a case in which the positive electrode active materials prepared in Examples 1 to 3 were used in the batteries, since initial charge and discharge capacities were not only excellent, but also capacity retentions of the batteries were high and resistance increase rates were low, it may be confirmed that life characteristics were also excellent.

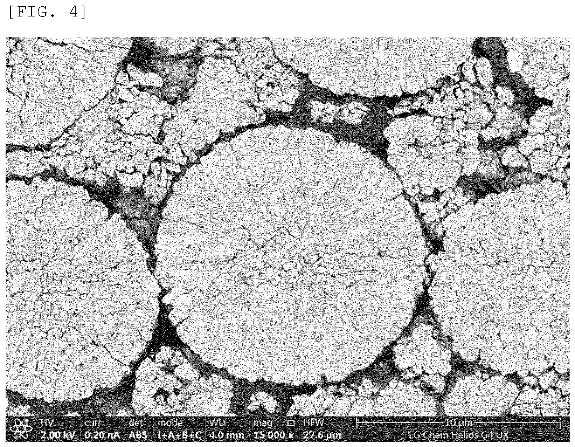

Referring to FIGS. 4 to 7 and Table 3, with respect to Comparative Examples 1, 2, and 4 in which the difference in particle strength between the large-particle-diameter lithium transition metal oxide and the small-particle-diameter lithium transition metal oxide was greater than 10 MPa, there was a problem in that the small-diameter lithium transition metal oxide particles were cracked, and, with respect to Comparative Examples 2 and 3 in which the particle strength of the large-particle-diameter lithium transition metal oxide was less than 140 MPa, since there was a problem in that the large-diameter lithium transition metal oxide particles were cracked, it may be confirmed that life characteristics were degraded due to a side reaction.

As a result, particularly in a case in which the two types of lithium transition metal oxides having different average particle diameters were mixed and used, but the difference in particle strength between the large-particle-diameter lithium transition metal oxide and the small-particle-diameter lithium transition metal was 10 MPa or less while the particle strength of the large-particle-diameter lithium transition metal oxide was 140 MPa or more as in the present invention, particle cracking may be suppressed while high volumetric energy density was obtained, and it may be confirmed that the occurrence of the side reaction caused by the cracking of the lithium transition metal oxide particles may be minimized to achieve a battery having excellent capacity characteristics and life characteristics.

**Claims**

1.   A positive electrode active material comprising a first lithium transition metal oxide and a second lithium transition metal oxide having an average particle diameter ($D_{50}$) smaller than an average particle diameter ($D_{50}$) of the first lithium transition metal oxide,

   wherein particle strength of the first lithium transition metal oxide is 140 MPa or more, and
   a difference in particle strength between the first lithium transition metal oxide and the second lithium transition metal oxide is 10 MPa or less.

2.   The positive electrode active material of claim 1, wherein the particle strength of the second lithium transition metal oxide is smaller than or equal to the particle strength of the first lithium transition metal oxide.

3.   The positive electrode active material of claim 1, wherein the particle strength of the second lithium transition metal oxide is in a range of 130 MPa or more to 190 MPa or less.

4.   The positive electrode active material of claim 1, wherein the positive electrode active material has a bimodal particle size distribution.

5. The positive electrode active material of claim 1, wherein the average particle diameter ($D_{50}$) of the first lithium transition metal oxide is in a range of 6 $\mu$m to 25 $\mu$m.

6. The positive electrode active material of claim 1, wherein the average particle diameter ($D_{50}$) of the second lithium transition metal oxide is in a range of 1 $\mu$m to 12 $\mu$m.

7. The positive electrode active material of claim 1, wherein the first lithium transition metal oxide and the second lithium transition metal oxide are each independently a lithium transition metal oxide in which a mole ratio of nickel in transition metals is 60% or more.

8. The positive electrode active material of claim 1, wherein the first lithium transition metal oxide and the second lithium transition metal oxide each independently have a composition represented by Formula 1:

   [Formula 1] $\quad$ $Li_{1+a}Ni_xCo_yM^1_zM^2_wO_2$

   wherein, in Formula 1,

   $0 \leq a \leq 0.30$, $0.60 \leq x < 1.0$, $0 < y < 0.40$, $0 < z < 0.40$, and $0 \leq w \leq 0.10$,
   $M^1$ is at least one selected from manganese (Mn) and aluminum (Al), and
   $M^2$ is at least one selected from tungsten (W), molybdenum (Mo), chromium (Cr), zirconium (Zr), titanium (Ti), magnesium (Mg), tantalum (Ta), and niobium (Nb).

9. The positive electrode active material of claim 1, wherein the first lithium transition metal oxide and the second lithium transition metal oxide are included in a weight ratio of 60:40 to 90:10.

10. A positive electrode comprising a positive electrode active material layer which includes the positive electrode active material of claim 1,

    wherein the first lithium transition metal oxide included in the positive electrode active material layer satisfies Equation 1:

    [Equation 1]

    $$0.4 \leq \frac{4\pi A}{P^2} \ (= \text{Form Factor}, F)$$

    wherein, in Equation 1,
    A and P are cross-sectional area and circumferential length of the first lithium transition metal oxide particle, respectively.

11. The positive electrode of claim 10, wherein the positive electrode active material layer has a porosity of 15 vol% to 30 vol%.

12. A lithium secondary battery comprising the positive electrode of claim 10.

[FIG. 1]

[FIG. 2]

[FIG. 3]

[FIG. 4]

[FIG. 5]

[FIG. 6]

| | 7/1/2020 9:27:57 AM | temp --- | mag ⊞ 10 000 x | HV 10.00 kV | WD 7.9 mm | vac mode High vacuum | det CBS | ⊢————— 5 µm —————⊣ Quanta FEG |

[FIG. 7]

## INTERNATIONAL SEARCH REPORT

| | International application No. |
|---|---|
| | **PCT/KR2022/006322** |

**A. CLASSIFICATION OF SUBJECT MATTER**

**H01M 4/36**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 2/16(2006.01); H01M 4/131(2010.01); H01M 4/505(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 평균입경 (average diameter), 입자 강도 (Powder Strength), 고니켈 (high nickel), 공극율 (porosity), 양극 (anode), 리튬 전지 (lithium battery)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0063373 A (LG CHEM, LTD.) 08 June 2017 (2017-06-08)<br>See abstract; paragraphs [0042] and [0144]; and claims 1, 2, 7 and 10. | 1-3,5-10,12 |
| Y | | 4,11 |
| Y | KR 10-2014-0098347 A (LG CHEM, LTD.) 08 August 2014 (2014-08-08)<br>See abstract; and claims 1, 4 and 10-12. | 4,11 |
| A | JP 6601500 B2 (HITACHI METALS, LTD.) 06 November 2019 (2019-11-06)<br>See entire document. | 1-12 |
| A | KR 10-2021-0023145 A (POSCO et al.) 04 March 2021 (2021-03-04)<br>See entire document. | 1-12 |
| A | JP 2018-160444 A (TOSHIBA CORP.) 11 October 2018 (2018-10-11)<br>See entire document. | 1-12 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **09 August 2022** | **10 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="3" align="center">INTERNATIONAL SEARCH REPORT<br>Information on patent family members</td><td colspan="2">International application No.<br><br>**PCT/KR2022/006322**</td></tr>
<tr><td colspan="2">Patent document<br>cited in search report</td><td>Publication date<br>(day/month/year)</td><td colspan="2">Patent family member(s)</td><td>Publication date<br>(day/month/year)</td></tr>
<tr><td>KR 10-2017-0063373</td><td>A</td><td>08 June 2017</td><td>CN</td><td>107949938 A</td><td>20 April 2018</td></tr>
<tr><td></td><td></td><td></td><td>CN</td><td>107949938 B</td><td>26 February 2021</td></tr>
<tr><td></td><td></td><td></td><td>EP</td><td>3386009 A1</td><td>10 October 2018</td></tr>
<tr><td></td><td></td><td></td><td>EP</td><td>3386009 B1</td><td>06 March 2019</td></tr>
<tr><td></td><td></td><td></td><td>JP</td><td>2018-536253 A</td><td>06 December 2018</td></tr>
<tr><td></td><td></td><td></td><td>JP</td><td>6763548 B2</td><td>30 September 2020</td></tr>
<tr><td></td><td></td><td></td><td>PL</td><td>3386009 T3</td><td>30 August 2019</td></tr>
<tr><td></td><td></td><td></td><td>US</td><td>11101462 B2</td><td>24 August 2021</td></tr>
<tr><td></td><td></td><td></td><td>US</td><td>2018-0241036 A1</td><td>23 August 2018</td></tr>
<tr><td></td><td></td><td></td><td>WO</td><td>2017-095081 A1</td><td>08 June 2017</td></tr>
<tr><td>KR 10-2014-0098347</td><td>A</td><td>08 August 2014</td><td>KR</td><td>10-1548248 B1</td><td>28 August 2015</td></tr>
<tr><td>JP 6601500</td><td>B2</td><td>06 November 2019</td><td>JP</td><td>2018-057078 A1</td><td>31 May 2018</td></tr>
<tr><td></td><td></td><td></td><td>WO</td><td>2017-057078 A1</td><td>06 April 2017</td></tr>
<tr><td>KR 10-2021-0023145</td><td>A</td><td>04 March 2021</td><td>CN</td><td>114556633 A</td><td>27 May 2022</td></tr>
<tr><td></td><td></td><td></td><td>EP</td><td>4020630 A1</td><td>29 June 2022</td></tr>
<tr><td></td><td></td><td></td><td>KR</td><td>10-2301642 B1</td><td>10 September 2021</td></tr>
<tr><td></td><td></td><td></td><td>WO</td><td>2021-034020 A1</td><td>25 February 2021</td></tr>
<tr><td>JP 2018-160444</td><td>A</td><td>11 October 2018</td><td>BR</td><td>102017019289 A2</td><td>30 October 2018</td></tr>
<tr><td></td><td></td><td></td><td>BR</td><td>102018004689 A2</td><td>20 August 2019</td></tr>
<tr><td></td><td></td><td></td><td>CN</td><td>108630894 A</td><td>09 October 2018</td></tr>
<tr><td></td><td></td><td></td><td>EP</td><td>3379605 A1</td><td>26 September 2018</td></tr>
<tr><td></td><td></td><td></td><td>US</td><td>2018-0277908 A1</td><td>27 September 2018</td></tr>
</table>

Form PCT/ISA/210 (patent family annex) (July 2019)

**EP 4 318 653 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210058086